Europäisches Patentamt

European Patent Office

Office européen des brevets

(19)

(11) **EP 1 232 067 B1**

(12) **EUROPÄISCHE PATENTSCHRIFT**

(45) Veröffentlichungstag und Bekanntmachung des Hinweises auf die Patenterteilung:
**08.06.2005 Patentblatt 2005/23**

(21) Anmeldenummer: 00989850.3

(22) Anmeldetag: **08.11.2000**

(51) Int Cl.$^7$: **B60K 28/16**, B60K 17/356

(86) Internationale Anmeldenummer:
**PCT/EP2000/011033**

(87) Internationale Veröffentlichungsnummer:
**WO 2001/038119 (31.05.2001 Gazette 2001/22)**

(54) **HYDROSTATISCHER FAHRANTRIEB UND VERFAHREN ZUM BETREIBEN DES HYDROSTATISCHEN FAHRANTRIEBS**

HYDROSTATIC DRIVE AND METHOD FOR OPERATING SUCH A HYDROSTATIC DRIVE

ENTRAINEMENT HYDROSTATIQUE ET PROCEDE D'UTILISATION D'UN ENTRAINEMENT HYDROSTATIQUE

(84) Benannte Vertragsstaaten:
**DE FI FR GB IT SE**

(30) Priorität: **24.11.1999 DE 19956469**

(43) Veröffentlichungstag der Anmeldung:
**21.08.2002 Patentblatt 2002/34**

(60) Teilanmeldung:
**04007091.4 / 1 431 098**

(73) Patentinhaber: **Bosch Rexroth AG**
**97816 Lohr am Main (DE)**

(72) Erfinder:
• **RINCK, Stefan**
**89264 Weissenhorn (DE)**
• **GIRSCHIKOFSKY, Günter**
**89250 Senden (DE)**

(74) Vertreter: **Körfer, Thomas, Dipl.-Phys. et al**
**Mitscherlich & Partner,**
**Patent- und Rechtsanwälte,**
**Sonnenstrasse 33**
**80331 München (DE)**

(56) Entgegenhaltungen:
**EP-A- 0 482 524      EP-A- 0 646 509**
**DE-A- 3 543 073      DE-A- 3 610 174**
**FR-A- 2 651 729      GB-A- 2 116 657**

**Beschreibung**

Die Erfindung betrifft einen hydrostatischen Fahrantrieb mit einer Hydropumpe und mehreren mit der Hydropumpe hydraulisch verbundenen Hydromotoren sowie ein Verfahren zum Betreiben eines solchen hydrostatischen Fahrantriebs.

Ein hydrostatischer Fahrantrieb ist aus der DE 35 43 073 C2 bekannt. Bei dem aus der dieser Druckschrift hervorgehenden hydrostatischen Fahrantrieb wird ein verstellbare Hydropumpe durch eine Brennkraftmaschine angetrieben. In einem Arbeitskreislauf sind mehrere parallel zueinander angeordnete Hydromotoren vorgesehen, die jeweils unterschiedliche Fahrzeugräder antreiben. Die Hydromotoren sind ebenfalls verstellbar ausgebildet. Jedem Hydromotor bzw. jedem Fahrzeugrad ist ein Drehzahlsensor zugeordnet, welcher mit einer elektronischen Steuereinheit verbunden ist. Die Schwenkwinkel der Hydromotoren wird für alle Hydromotoren synchron geregelt.

In dem Fall, daß an einem der Fahrzeugräder aufgrund einer verminderten Bodenhaftung ein Schlupf auftritt, besteht das Problem, daß dieses Fahrzeugrad durchdreht und sich die Drehzahl des zugeordneten Hydromotors gegenüber den Drehzahlen der übrigen Hydromotoren beträchtlich erhöht. Dadurch fließt ein beträchtlicher Volumenstrom durch denjenigen Hydromotor, dessen Fahrzeuggrad dem Schlupf unterworfen ist, wodurch der den übrigen Hydromotoren, über welche der Antrieb erfolgt, zur Verfügung stehende Volumenstrom verringert wird. Dadurch wird der Wirkungsgrad des hydrostatischen Antriebs erheblich vermindert.

Um dies zu vermeiden, wird in der DE 35 43 073 C2 vorgeschlagen, die Drehzahlen der einzelnen Fahrzeugräder bzw. Hydromotoren in der elektronischen Steuereinheit fortwährend miteinander zu vergleichen. Tritt eine deutliche Abweichung der Drehzahl eines der Fahrzeugräder gegenüber den Drehzahl der übrigen Fahrzeugräder auf, so deutet dies auf einen Schlupf an diesem Fahrzeugrad hin. Die hydraulische Schwenkwinkelregelung des betroffenen Fahrzeugrades wird durch ein elektromagnetisch betätigbares Steuerventil so übersteuert, daß das Schluckvolumen des dem betroffenen Fahrzeugrad zugeordneten Hydromotors durch Zurückschwenken verringert wird.

Nachteilig bei dem in der DE 35 43 073 C2 vorgeschlagenen Zurückschwenken desjenigen Hydromotors, dessen Fahrzeuggrad einem Schlupf unterworfen ist, ist jedoch, daß durch das Zurückschwenken des Hydromotors zwar der durch diesen Hydromotor strömende Volumenstrom verringert wird und somit den anderen Hydromotoren zur Verfügung steht, mit dem Zurückschwenken des Hydromotors bei gleichbleibendem Schwenkwinkel der Hydropumpe und der übrigen Hydromotoren jedoch gleichzeitig eine Beschleunigung des zugehörigen Fahrzeugrades und somit eine erneute Drehzahlzunahme verbunden sein kann, insbesondere, wenn die Drehbewegung des Fahrzeugrades keiner bodenhaftungsbedingten Reibung unterworfen ist. Diese Maßnahme schließt deshalb die Gefahr eines Überdrehens des zurückgeschwenkten Hydromotors nicht aus.

Aus der DE-AS 21 35 279 ist als solches ein hydrostatischer Fahrantrieb mit einer verstellbaren Hydropumpe und einem einzigen verstellbaren Hydromotor in Kombination mit einer Fahrzeugbremse bekannt. Die Fahrzeugbremse ist mittels eines Bremspedals pneumatisch betätigbar. Das pneumatische Bremsventil ist mit der hydraulischen Verstelleinrichtung verbunden, so daß das hydrostatische Getriebe bei einer Betätigung der Fahrzeugbremse zurückgestellt wird, um eine gegensinnige Kraftwirkung zwischen dem Antrieb über das hydrostatische Getriebe und der Fahrzeugbremse zu vermeiden. Ferner ist an der die Brennkraftmaschine mit der Hydropumpe verbindenden Welle ein Drehzahlsensor angeordnet, welcher die Fahrzeugbremse betätigt, wenn die Drehzahl der Bremskraftmaschine die maximal zulässige Höchstdrehzahl erreicht. Durch Abbremsen des Fahrzeuges wird ein Überschreiten der Höchstdrehzahl und somit ein Überdrehen der Brennkraftmaschine vermieden. Aus dieser Druckschrift ergibt sich jedoch keinerlei Hinweis, die Fahrzeugbremse in Verbindung mit einer Antischlupf-Regelung an einem hydrostatischen Fahrantrieb zu verwenden.

In der FR-A-2 651 729 gemäß Oberbegriff des Anspruchs 1 wird ein hydrostatischer Fahrantrieb mit vier über jeweils einen Hydromotor angetriebenen Rädern vorgestellt. Die vier Hydromotoren, deren Drehzahl über jeweils einen Drehzahlsensor erfasst werden, werden von einer Hydropumpe angetrieben. Bei Drehzahlüberschreitung einer der Hydromotoren wird über eine elektrische Steuereinrichtung jeweils eine am jeweiligen Rad angeordnete Bremseinrichtung betätigt. Die Betätigung der Bremseinrichtung des Rades erfolgt hydraulisch über ein proportionales Verstellventil, das als 2/2-Stellventil ausgelegt ist und von der elektrischen Steuereinrichtung angesteuert wird. Das 2/2 Stellventil steht unter Zwischenschaltung eines Druckminderventils über eine Hydraulikleitung mit der Druckleitung, die die Hydropumpe mit dem Hydromotor verbindet, in Kontakt.

Der Erfindung liegt die Aufgabe zugrunde, einen hydrostatischen Fahrantrieb zu schaffen, bei welchem eine Verminderung des Wirkungsgrades beim Auftreten eines Schlupfes an einem der unterschiedlichen Hydromotoren zugeordneten Antriebssträngen verhindert wird, ohne daß die Gefahr des Überdrehens der Hydromotoren besteht.

Die Aufgabe wird bezüglich des hydrostatischen Fahrantriebs durch die Merkmale des Anspruchs 1 gelöst.

Der Erfindung liegt die Erkenntnis zugrunde, daß durch Anordnung einer Bremseinrichtung an jedem Hydromotor eine wirkungsvolle Begrenzung der Drehzahl der Hydromotoren erreicht werden kann, wenn der dem jeweiligen Hydromotor zugeordnete Antriebsstrang einem Schlupf ausgesetzt ist. Eine Steuereinheit betätigt selektiv die Bremseinrichtung nur desjenigen Hydromotors, dessen Antriebsstrang einem Schlupf unterworfen sind. Die Bremseinrichtungen der übrigen Hydromotoren werden nicht betätigt, so daß deren Antriebsstränge nicht beeinträchtigt werden. Im Gegensatz zu dem aus dem Stand der Technik bekannten Zurückschwenken der Hydromotoren auf ein geringeres Schluckvolumen, hat die Verwendung von Bremseinrichtungen den Vorteil, daß die mit dem Zurückschwenken des Hydromotors verbundene Gefahr der Drehzahlzunahme nicht besteht. Dadurch, daß der betroffene Hydromotor gezielt abgebremst wird, wird ein Überdrehen diese Hydromotors sicher vermieden.

Die Ansprüche 2 bis 8 beinhalten vorteilhafte Weiterbildungen des erfindungsgemäßen hydrostatischen Fahrantriebs.

Es ist vorteilhaft, die Steuereinheit als elektronische Steuereinheit auszubilden und die Bremseinrichtung hydraulisch über ein elektronisch ansteuerbares Steuerventil zu betätigen. Durch die elektronische Steuereinheit wird eine kurze Ansprechzeit ermöglicht. Die Steuereinheit kann vorteilhaft mit einem weiteren Drehzahlsensor zum Ermitteln der Drehzahl der Hydropumpe, einem Geschwindigkeitssensor zum Ermitteln der Fahrzeug-Geschwindigkeit eines von dem Fahrantrieb angetriebenen Fahrzeugs und/oder einem Lenkwinkelgeber zum Erfassen des Lenkwinkels eines von dem Fahrantrieb angetriebenen Fahrzeugs verbunden sein. Diese zusätzlichen Sensoren dienen zur Ermittlung des variablen Grenzwerts der Drehzahlen für die einzelnen Hydromotoren.

Der Grenzwert für die Drehzahlen der Hydromotoren kann im einfachsten Fall durch eine arithmetische Berechnung aus den Drehzahlen sämtlicher Hydromotoren ermittelt werden. Der Grenzwert kann beispielsweise aus dem arithmetischen Mittelwert der Drehzahlen sämtlicher Hydromotoren berechnet werden. Alternativ oder zusätzlich kann der Grenzwert auch auf der Grundlage der erfaßten Fahrzeug-Geschwindigkeit des angetriebenen Fahrzeugs ermittelt werden. Eine weitere zusätzliche oder alternative Möglichkeit zur Bestimmung des Grenzwerts besteht darin, den von der Hydropumpe erzeugten Volumenstrom mit dem Volumenstrom durch den jeweiligen Hydromotor zu vergleichen. Sind beispielsweise vier Hydromotoren in dem hydrostatischen Fahrantrieb vorgesehen und beträgt der Volumenstrom durch einen der Hydromotoren wesentlich mehr als ein Viertel des von der Hydropumpe erzeugten Volumenstroms, so deutet dies auf einen Schlupf an dem entsprechenden Antriebsstrang hin.

Bei einer Betätigung zumindest einer der Bremseinrichtungen ist es vorteilhaft, wenn der Schwenkwinkel der Hydropumpe zurückgeschwenkt wird, um die Antriebsleistung zu verringern, und/oder der Schwenkwinkel des der betätigten Bremseinrichtung zugeordneten Hydromotors zurückgeschwenkt wird, um das Abtriebsmoment dieses Hydromotors zu verringern. Dadurch werden eine Überhitzung und ein übermäßiger Verschleiß der betätigten Bremseinrichtung vermieden.

Ferner ist es vorteilhaft, wenn über einen Lenkwinkelgeber der Lenkwinkel des von dem Fahrantrieb angetriebenen Fahrzeugs erfaßt wird und die sich aufgrund der Differentialwirkung ergebende Drehzahldifferenz zweier sich beispielsweise an einer gemeinsamen Fahrzeugachse gegenüberliegender Hydromotoren bei der Bemessung des Grenzwerts für das Auslösen der Bremseinrichtung berücksichtigt wird.

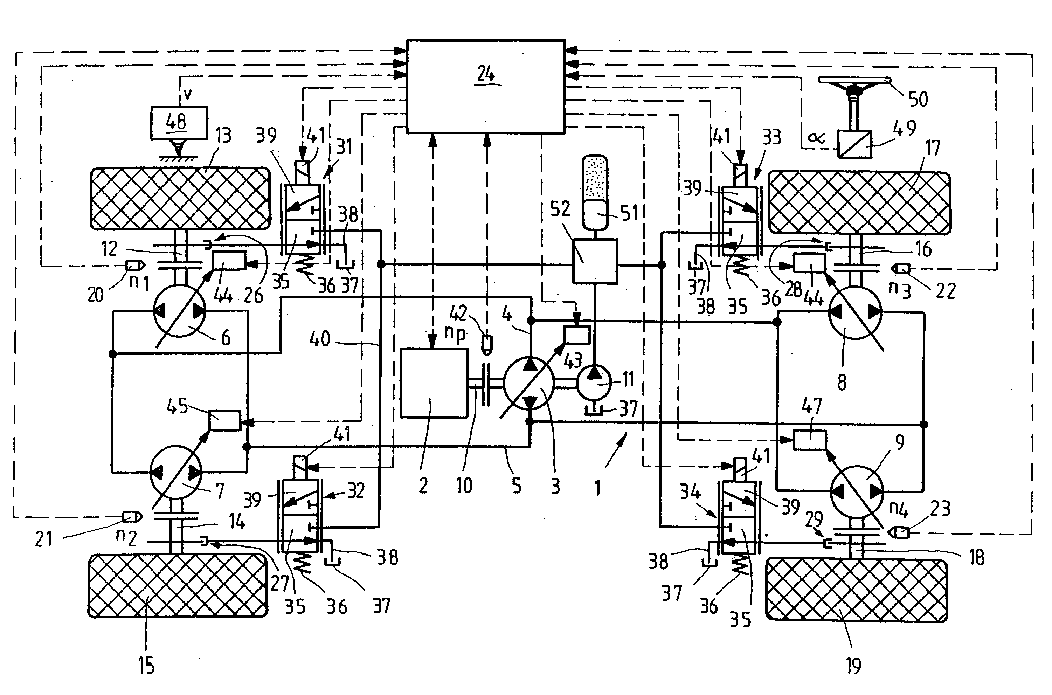

Die Erfindung wird nachfolgend unter Bezugnahme auf die Zeichnung näher beschrieben. Die einzige Figur der Zeichnung zeigt ein erfindungsgemäßes Ausführungsbeispiel eines hydrostatischen Fahrantriebs.

Der allgemein mit dem Bezugszeichen 1 bezeichnete hydrostatische Fahrantrieb umfaßt eine von einer Brennkraftmaschine 2 angetriebene Hydropumpe 3, die über einen aus einer ersten Arbeitsleitung 4 und einer zweiten Arbeitsleitung 5 bestehenden Arbeitskreislauf mit zumindest zwei Hydromotoren, im Ausführungsbeispiel mit vier Hydromotoren, nämlich dem ersten Hydromotor 6, dem zweiten Hydromotor 7, dem dritten Hydromotor 8 und dem vierten Hydromotor 9, hydraulisch verbunden ist. Die Hydropumpe 3 ist über eine Antriebswelle 10 mit der Brennkraftmaschine 2 verbunden. Auf der Antriebswelle 10 sitzt im Ausführungsbeispiel 10 ferner eine Hilfspumpe 11. Die Hydromotoren 6 - 9 sind in dem Arbeitskreislauf 4, 5 parallel zueinander angeordnet, wobei jeweils einer der Anschlüsse der Hydromotoren 6 - 9 über die erste Arbeitsleitung 4 mit einem Anschluß der Hydropumpe 3 verbunden ist und der jeweils andere Anschluß der Hydromotoren 6 bis 9 über die zweite Arbeitsleitung 5 mit dem anderen Anschluß der Hydropumpe 3 verbunden ist.

Der erste Hydromotor 6 treibt über eine erste Abtriebswelle 12 ein erstes Fahrzeugrad 13 an, der zweite Hydromotor 7 treibt über eine zweite Abtriebswelle 14 ein zweites Fahrzeugrad 15 an, der dritte Hydromotor 8 treibt über eine dritte Abtriebswelle 16 ein drittes Fahrzeugrad 17 an und der vierte Hydromotor 9 treibt über eine vierte Abtriebswelle 18 ein viertes Fahrzeugrad 19 an. Die Drehzahl $n_1$ des ersten Hydromotors 6 wird durch einen ersten Drehzahlsensor 20, die Drehzahl $n_2$ des zweiten Hydromotors 7 wird durch einen zweiten Drehzahlsensor 21, die Drehzahl $n_3$ des dritten Hydromotor 8 wird durch einen dritten Drehzahlsensor 22 und die Drehzahl $n_4$ des vierten Hydromotors 9 wird durch einen vierten Drehzahlsensor 23 erfaßt. Die im Ausführungsbeispiel elektrischen Drehzahlsignale der Drehzahlsensoren 20 - 23 werden einer im Ausführungsbeispiel elektronischer Steuereinheit 24 zugeführt, die beispielsweise als Mikrocontroller oder als Mikroprozessor ausgebildet sein kann.

Erfindungsgemäß ist jedem Hydromotor 6 - 9 jeweils eine Bremseinrichtung 26 - 29 zugeordnet, d. h.

dem ersten Hydromotor 6 ist eine erste Bremseinrichtung 26, dem zweiten Hydromotor 7 ist eine zweite Bremseinrichtung 27, dem dritten Hydromotor 8 ist eine dritte Bremseinrichtung 28 und dem vierten Hydromotor 9 ist eine vierte Bremseinrichtung 29 zugeordnet, welche bei einer Betätigung die entsprechende Abtriebswelle 12, 14, 16 bzw. 18 abbremst. Im dargestellten bevorzugten Ausführungsbeispiel sind die Bremseinrichtungen 26 - 29 jeweils hydraulisch betätigbar und jeweils über ein Steuerventil 31, 32, 33 bzw. 34 ansteuerbar. Die Steuerventile 31 bis 34 sind jeweils als 3/2-Wegeventile ausgebildet. In einer ersten Ventilstellung 35 sind die Bremseinrichtungen 26 - 29 jeweils mit einer zum Hydraulikfluid-Tank 37 führenden Tankleitung 38 verbunden. In einer zweiten Ventilstellung 39 hingegen, sind die Bremseinrichtungen 26 - 29 mit einer Druckleitung 40 verbunden, so daß die zugeordnete Bremseinrichtung 26, 27, 28 bzw. 29 in dieser Ventilstellung mit Druck beaufschlagt wird und somit eine Bremswirkung auf die zugeordnete Abtriebswelle 12, 14, 16 bzw. 18 ausübt. Die Steuerventile 31 - 34 sind jeweils durch einen elektrisch ansteuerbaren Steuergeber 41, beispielsweise einen Elektromagneten, ansteuerbar. Die Steuerventile 31 - 34 sind vorzugsweise als Proportionalventile ausgebildet, d. h. die Steuerventile 31 - 34 können proportional zum erregenden elektrischen Strom zwischen den Ventilstellungen 35 und 39 jede Zwischenstellung einnehmen. Eine Rückstellfeder 36 bewirkt, daß die Steuerventile 31 - 34 jeweils die erste Ventilstellung 35 als Grundstellung einnehmen, wenn sie nicht durch den Steuergeber 41 beaufschlagt sind. Die elektrisch ansteuerbaren Steuergeber 41 der Steuerventile 31 - 34 stehen mit der elektronischen Steuereinheit 24 in Verbindung und sind von dieser elektrisch ansteuerbar.

An der Antriebswelle 10 ist im dargestellten Ausführungsbeispiel ferner ein fünfter Drehzahlsensor 42 zum Erfassen der Drehzahl $n_p$ der Hydropumpe 3 vorgesehen. Die Hydropumpe 3 und der Hydromotoren 6 - 9 sind in dem bevorzugten Ausführungsbeispiel verschwenkbar, d. h. das Fördervolumen pro Umdrehung der Hydropumpe 3 und das Schluckvolumen pro Umdrehung der Hydromotoren 6 - 9 ist veränderbar. Eine Verstellvorrichtung 43 der Hydropumpe 3 sowie eine Verstellvorrichtung 44 des ersten Hydromotors 6, eine Verstellvorrichtung 45 des zweiten Hydromotors 7, eine Verstellvorrichtung 46 des dritten Hydromotors 8 und eine Verstellvorrichtung 47 des vierten Hydromotors 9 sind durch die elektronische Steuereinheit 24 ansteuerbar.

Die elektronische Steuereinheit 24 ist vorzugsweise ferner mit einem Geschwindigkeitssensor 48, der die Fahrzeug-Geschwindigkeit v des von dem hydrostatischen Fahrantrieb 1 angetriebenen Fahrzeugs über Grund erfaßt, sowie mit einem Lenkwinkelgeber 49, der den beispielsweise durch ein Lenkrad 50 vorgegebenen Lenkwinkel α des von dem Fahrantrieb 1 angetriebenen Fahrzeugs erfaßt, verbunden.

Die Druckleitung 40 wird aus einem Hydraulikfluid-Speicher 51 mit Hydraulikfluid versorgt, das die Hilfspumpe 11 aus dem Hydraulikfluid-Tank 37 ansaugt. Der Hydraulikfluid-Speicher 51 wird über ein Speicherladeventil 52 geladen.

Die Funktionsweise des erfindungsgemäßen Fahrantriebs 1 ist wie folgt:

Solange an den Antriebsrädern 13, 15, 17 und 19 keinerlei Schlupf auftritt und eine gute Bodenhaftung besteht, erfolgt der Antrieb als Allradantrieb über sämtliche Hydromotoren 6 - 9. Die Schwenkwinkelverstellung der Hydromotoren 6 - 9 wird dabei durch die elektronische Steuereinheit 24, abgesehen von durch den Differentialausgleich hervorgerufene Korrekturen bei Kurvenfahrten, synchron vorgenommen. Mit zunehmender Fahrzeug-Geschwindigkeit wird dabei der Schwenkwinkel der Hydropumpe 3 weiter ausgeschwenkt und dann der Schwenkwinkel der Hydromotoren 6 - 9 mit weiter zunehmender Fahrzeug-Geschwindigkeit zurückgeschwenkt.

Tritt jedoch an einem der Fahrzeugräder 13, 15, 17, 19, beispielsweise an dem Fahrzeugrad 13, ein Schlupf auf, so hätte dies ohne die erfindungsgemäße Maßnahme zur Folge, daß sich die Drehzahl $n_1$ an dem Fahrzeugrad 13 aufgrund der verminderten Bodenhaftung drastisch erhöhen würde und somit der den Hydromotor 6 durchströmende Volumenstrom zunehmen würde. Bei von der Hydropumpe 3 erzeugtem konstanten Volumenstrom folgt daraus, daß der Volumenstrom für die für den Antrieb noch zur Verfügung stehenden übrigen Hydromotoren 7, 8 und 9 drastisch abnehmen würde und sich somit eine Verminderung des Wirkungsgrades des hydrostatischen Fahrantriebs 1 ergeben würde.

Erfindungsgemäß wird jedoch die Bremseinrichtung 26 des Hydromotors 6, dessen Fahrzeugrad 13 dem Schlupf unterworfen ist, betätigt, so daß die Drehzahl $n_1$ des Hydromotors 6 begrenzt wird. Die Bremswirkung ist idealerweise so bemessen, daß das Fahrzeugrad 13 an dem schlecht haftenden Untergrund antriebslos mitdrehen kann. Die Drehzahl $n_1$ des Hydromotors 6 unterscheidet sich dann nicht von den Drehzahlen $n_2$, $n_3$, $n_4$ der übrigen Hydromotoren 7 - 9, so daß der Volumenstrom durch die übrigen Hydromotoren 7 - 9 durch den Schlupf an dem Fahrzeugrad 13 unbeeinträchtigt bleibt. Zusätzlich kann der Hydromotor 6 über die Verstellvorrichtung 44 auf ein geringeres Schluckvolumen pro Umdrehung zurückgeschwenkt werden, so daß der Volumenstrom durch den Hydromotor 6 abnimmt oder sogar zu Null wird und somit der von der Hydropumpe 3 erzeugte Volumenstrom nahezu vollständig für den Antrieb über die Hydromotoren 7, 8 und 9 zur Verfügung steht.

Um eine Überhitzung bzw. einen übermäßigen Verschleiß der Bremseinrichtungen 26 - 29 zu vermeiden, ist es vorteilhaft, die Antriebsleistung des hydrostatischen Fahrantriebs 1 im Falle einer Betätigung zumindest einer der Bremseinrichtungen 26 - 29 zu vermindern. Dies kann entweder direkt durch Vermindern des der Brennkraftmaschine 2 zugeführten Brennstoffs und/oder Drosseln der Ansaugluft erfolgen oder durch ein Zurückschwenken der Hydropumpe 3 mittels der Verstellvorrichtung 43.

Für die Feststellung, ob an einem der Fahrzeugräder 13, 15, 17 oder 19 ein Schlupf auftritt, stehen mehrere Möglichkeiten zur Verfügung, die auch in Kombination zum Einsatz kommen können und nachfolgend beschrieben werden.

Erfindungsgemäß wird die Drehzahl $n_1$, $n_2$, $n_3$ und $n_4$ sämtlicher Fahrzeugräder 13, 15, 17 und 19 kontinuierlich durch die Drehzahlsensoren 20, 21, 22 und 23 gemessen. Das Meßsignal wird der elektronischen Steuereinheit 24 zugeführt. Durch Vergleich der Drehzahlen $n_1$, $n_2$, $n_3$, und $n_4$ läßt sich feststellen, ob eine der Drehzahlen $n_1$, $n_2$, $n_3$ oder $n_4$ wesentlich größer ist, als die Drehzahlen der übrigen Fahrzeugräder 13, 15, 17, 19. Beispielsweise kann ein Grenzwert ng für die Drehzahlen dadurch festgelegt werden, daß das arithmetische Mittel aus sämtlichen Drehzahlen $n_1$, $n_2$, $n_3$ und $n_4$ berechnet wird und hierzu eine Toleranz-Konstante C addiert wird. Der Grenzwert ng ergibt sich dann im Ausführungsbeispiel wie folgt:

$$n_g = (n_1 + n_2 + n_3 + n_4) / 4 + C \qquad (1)$$

Überschreitet eine der Drehzahlen $n_1$, $n_2$, $n_3$ oder $n_4$ diesen Grenzwert ng, so deutet dies auf einen Schlupf an dem betreffenden Fahrzeugrad 13, 15, 17 bzw. 19 hin, so daß eine Betätigung der entsprechenden Bremseinrichtung 26, 27, 28 oder 29 erfolgt. Unterschreitet die Drehzahl an dem von dem Schlupf betroffene Fahrzeugrad wieder den Grenzwert ng, so wird die entsprechende Bremseinrichtung 26, 27, 28 oder 29 wieder freigegeben.

Eine alternative oder zusätzliche Möglichkeit zur Bestimmung des Grenzwerts ng für die Drehzahlen $n_1$, $n_2$, $n_3$ und $n_4$ besteht darin, mittels des Geschwindigkeitssensors 48 die Fahrzeug-Geschwindigkeit v des von dem hydrostatischen Fahrantrieb 1 angetriebenen Fahrzeugs über Grund zu ermitteln. Der Grenzwert ng ergibt sich dann durch Division der Fahrzeug-Geschwindigkeit v durch den Umfang U des jeweiligen Fahrzeuggrads 13, 15, 17 bzw. 19 und Addition der Toleranz-Konstante C, d. h. durch die Formel:

$$n_g = v/U + C \qquad (2)$$

Eine weitere alternative oder zusätzliche Möglichkeit zur Bestimmung des Grenzwerts ng besteht in einem Vergleich des von der Hydropumpe 3 erzeugten Volumenstroms mit dem die Hydromotoren 6 - 9 durchströmenden Volumenstrom. Sofern die Hydromotoren 6 bis 9 synchron verschwenkt werden, gilt bei im Ausführungsbeispiel vier Hydromotoren ohne das Auftreten eines Schlupfes die Beziehung:

$$n_p \cdot V_p = 4 \cdot n_m \cdot V_m .$$

Darin bedeuten: $n_p$ die mit dem Drehzahlsensor 42 erfaßte Drehzahl der Hydropumpe 3, $V_p$ das von der Hydropumpe 3 pro Umdrehung erzeugte Fördervolumen, $n_m$ die Soll-Drehzahl ohne Schlupf der Hydromotoren 6 - 9 und $V_m$ das Schluckvolumen der Hydromotoren 6 - 9 pro Umdrehung. Das Fördervolumen pro Umdrehung der Hydropumpe 3 ist durch die Verstellvorrichtung 43 festgelegt, während das Schluckvolumen pro Umdrehung der Hydromotoren 6 - 9 durch die synchron angesteuerten Verstellvorrichtungen 44 - 47 festgelegt ist. Für den Grenzwert ng der Drehzahl der Hydromotoren 6 - 9, welcher zum Auslösen der zugehörigen Bremseinrichtung 26 - 29 führt, gilt deshalb:

$$n_g = (n_p \cdot V_p) / (4 \cdot V_m) + C \qquad (3)$$

Dabei bedeutet C wiederum eine Toleranz-Konstante, die ein geringfügiges Übersteigen der gemessenen Ist-Drehzahl $n_1$, $n_2$, $n_3$ bzw. $n_4$ über die wie vorstehend berechnete Soll-Drehzahl $n_m$ ermöglicht.

Da sich bei Kurvenfahrten aufgrund der Differentialwirkung eine Abweichung der Drehzahlen $n_1$ und $n_2$ bzw. $n_3$ und $n_4$ der sich an einer Achse gegenüberliegenden Fahrzeugräder 13 und 15 bzw. 17 und 19 ergibt, ist es sinnvoll, die Toleranz-Konstante C als Funktion des Lenkwinkels $\alpha$ zu bemessen. Der Lenkwinkel $\alpha$ des Fahrzeugs kann durch den Lenkwinkelgeber 49 erfaßt werden. Die zu dem erfaßten Lenkwinkel $\alpha$ gehörige Toleranz-Konstante C kann in einem Speicher der elektronischen Steuereinheit 24 in Form einer Tabelle gespeichert sein und entsprechend abgerufen werden.

Wenn der Grenzwert $n_g$ für die Drehzahlen mit mehreren Methoden bestimmt wird, kann beispielsweise ein Mittelwert aus dem mit den verschiedenen Methoden ermittelten Grenzwerten $n_g$ berechnet werden oder es kann der jeweils kleinste Grenzwert $n_g$ zum Auslösen der Bremseinrichtungen 26 - 29 herangezogen werden.

Die Erfindung ist nicht auf das dargestellte Ausführungsbeispiel beschränkt. Beispielsweise kann der Antrieb auch über weniger oder mehr als vier Fahrzeugräder erfolgen. Anstatt über Fahrzeugräder kann der Antrieb auch über Antriebsketten erfolgen. Der Antrieb kann auch über mehrere Hydropumpen erfolgen, wobei jeder Hydropumpe zumindest zwei Hydromotoren zugeordnet sind. Als Bremseinrichtung kann entweder für jeden Hydromotor 6 - 9 eine separate Bremse angebracht werden oder es kann eine bestehende Fahrzeugbremse so modifiziert werden, daß die Ansteuerung der Fahrzeugbremse für jedes Fahrzeugrad separat und unabhängig ermöglicht wird. Der Druck in der Druckleitung 40 zum Betätigen der Bremseinrichtungen 26 - 29 kann auch aus dem Arbeitsdruck in den Arbeitsleitungen 4 und 5 abgeleitet werden. Dazu kann die Druckleitung 40 über ein Druckreduzierventil und ein Wechselventil mit der jeweils druckführenden Arbeitsleitung 4 bzw. 5 verbunden sein. Der erfindungsgemäße Fahrantrieb 1 kann ferner, insbesondere bei landwirtschaftlichen Maschinen, als Lenkbrems-System eingesetzt werden.

**Patentansprüche**

1. Hydrostatischer Fahrantrieb (1) mit zumindest einer Hydropumpe (3) und mehreren mit der Hydropumpe (3) hydraulisch verbundenen Hydromotoren (6 - 9), wobei jedem Hydromotor (6; 7; 8; 9) jeweils ein Drehzahlsensor (20; 21; 22; 23) zugeordnet ist, der jeweils mit einer Steuereinheit (24) verbunden ist und die Drehzahl ($n_1$; $n_2$; $n_3$; $n_4$) des zugeordneten Hydromotors (6; 7; 8; 9)erfaßt, und jeweils eine Bremseinrichtung (26; 27; 28; 29) zugeordnet ist, die bei Überschreiten der Drehzahl ($n_1$; $n_2$; $n_3$; $n_4$) des zugeordneten Hydromotors (6; 7; 8; 9) über einen vorgegebenen Grenzwert ($n_g$) durch die Steuereinheit (24) über jeweils ein Steuerventil (31; 32; 33; 34) ausgelöst wird,
**dadurch gekennzeichnet,**
**dass** das Steuerventil (31; 32; 33; 34) die zugeordnete Bremseinrichtung (26; 27; 28; 29) mit einer Tankleitung (38) oder über eine Druckleitung (40) mit einer Hilfspumpe (11) verbindet.

2. Hydrostatischer Fahrantrieb nach Anspruch 1,
**dadurch gekennzeichnet,**
**daß** jedes Steuerventil (31; 32; 33; 34) als 3/2-Wegeventil ausgebildet ist und in Abhängigkeit von einem elektrisch ansteuerbaren Steuergeber (41) die Tankleitung (38) oder die Hilfspumpe (11) über die Druckleitung (40) mit der jeweiligen Bremseinrichtung (26; 27; 28; 29) verbindet.

3. Hydrostatischer Fahrantrieb nach Anspruch 1 oder 2,
**dadurch gekennzeichnet,**
**daß** die Hilfspumpe (11) zusammen mit der Hydropumpe (3) angetrieben wird.

4. Hydrostatischer Fahrantrieb nach einem der Ansprüche 1 bis 3,
**dadurch gekennzeichnet,**
**daß** die Druckleitung (40) mit einer Arbeitsleitung (4; 5) in Verbindung steht, die die Hydropumpe (3) mit den Hydromotoren (6 - 9) verbindet.

5. Hydrostatischer Fahrantrieb nach einem der Ansprüche 1 bis 4,
**dadurch gekennzeichnet,**
**daß** die Steuereinheit (24) mit einem weiteren Drehzahlsensor (42) in Verbindung steht, der die Drehzahl ($n_p$) der Hydropumpe (3) erfaßt.

6. Hydrostatischer Fahrantrieb nach einem der Ansprüche 1 bis 5,
**dadurch gekennzeichnet,**
**daß** die Steuereinheit (24) mit einem Geschwindigkeitssensor (48) in Verbindung steht, der die Fahrzeug-Geschwindigkeit (v) eines von dem Fahrtrieb (1) angetriebenen Fahrzeugs gefaßt.

7. Hydrostatischer Fahrantrieb nach einem der Ansprüche 1 bis 6,
**dadurch gekennzeichnet,**
**daß** die Steuereinheit (24) mit einem Lenkwinkelgeber (49) in Verbindung steht, der den Lenkwinkel ($\alpha$) eines von dem Fahrantrieb (1) angetriebenen Fahrzeugs gefaßt.

8. Hydrostatischer Fahrantrieb nach einem der Ansprüche 1 bis 7,
**dadurch gekennzeichnet,**
**daß** die Steuereinheit (24) eine elektronische Steuereinheit (24), insbesondere ein Mikrocontroller oder ein Mikroprozessor, ist.

**Claims**

1. Hydrostatic drive (1) with at least one hydraulic pump (3) and a plurality of hydraulic motors (6 - 9) that are hydraulically linked to the hydraulic pump (3), wherein one speed sensor (20; 21; 22; 23), which is linked to a control device (24) and detects the speed ($n_1$; $n_2$; $n_3$; $n_4$) of the allocated hydraulic motor (6; 7; 8; 9) in each case,and one brake device (26; 27; 28; 29), which is triggered by the control device (24) via a control valve (31; 32; 33; 34)in each case when the speed ($n_1$; $n_2$; $n_3$; $n_4$) of the allocated hydraulic motor (6; 7; 8; 9) exceeds a predetermined threshold value (ng), are allocated to each hydraulic motor (6; 7; 8; 9) respectively,
**characterised in that**
the control valve (31; 32 ; 33; 34)links the allocated brake device (26; 27; 28; 29) to a tank line (38) or via a pressure line (40) to an auxiliary pump (11).

2. Hydrostatic drive according to Claim 1,
**characterised in that**
each control valve (31; 32; 33; 34) is designed as a 3/2-way valve and dependent on an electrically-operated actuator (41) connects the tank line (38) or the auxiliary pump (11) via the pressure line (40) to the allocated brake device (26; 27; 28; 29).

3. Hydrostatic drive according to Claim 1 or 2, **characterised in that** the auxiliary pump (11) is driven together with the hydraulic pump (3).

4. Hydrostatic drive according to any one of Claims 1 to 3, **characterised in that** the pressure line (40) communicates with a working line (4; 5), which connects the hydraulic pump (3) to the hydraulic motors (6 - 9).

5. Hydrostatic drive according to any one of Claims 1 to 4, **characterised in that** the control device (24) communicates with a further speed sensor (42), which detects the speed ($n_p$) of the hydraulic pump (3).

6. Hydrostatic drive according to any one of Claims 1 to 5, **characterised in that** the control device (24) communicates with a speed sensor (48), which detects the road speed (v) of a vehicle propelled by the drive (1).

7. Hydrostatic drive according to any one of Claims 1 to 6, **characterised in that** the control device (24) communicates with a steering angle transmitter (49), which detects the steering angle ($\alpha$) of a vehicle propelled by the drive (1).

8. Hydrostatic drive according to any one of Claims 1 to 7, **characterised in that** the control device (24) is an electronic control device (24), in particular a microcontroller or a microprocessor.

## Revendications

1. Dispositif d'entraînement hydrostatique de déplacement (1) comportant au moins une pompe hydraulique (3) et plusieurs moteurs hydrauliques (6-9) reliés par voie hydraulique à la pompe hydraulique (3), dans lequel à chaque moteur hydraulique (6; 7; 8; 9) est associé respectivement un capteur de vitesse de rotation (20; 21; 22; 23), qui est relié respectivement à une unité de commande (34) et détecte la vitesse de rotation ($n_1$; $n_2$; $n_3$; $n_4$) du moteur hydraulique associé (6; 7; 8; 9) et auquel est associé respectivement un dispositif de freinage (26; 27; 28; 29), qui, lorsque la vitesse de rotation ($n_1$; $n_2$; $n_3$; $n_4$) du moteur hydraulique associé (6; 7; 8; 9) dépasse une valeur limite prédéterminée ($n_g$), est déclenché par l'unité de commande (24) par l'intermédiaire d'une soupape de commande respective (31; 32; 33; 34), **caractérisé en ce que** la soupape de commande (31; 32; 33; 34) relie le dispositif de freinage associé (26; 27; 28; 29) à une canalisation (38) de réservoir ou, par l'intermédiaire d'une canalisation de pression (40), à une pompe auxiliaire (11).

2. Dispositif d'entraînement hydrostatique de déplacement selon la revendication 1, **caractérisé en ce que** chaque soupape de commande (31; 32; 33; 34) est agencée sous la forme d'une soupape à 3/2 voies et relie, en fonction d'un générateur de commande (41) commandé électriquement, la canalisation de réservoir (38) ou la pompe auxiliaire (11) par l'intermédiaire de la canalisation de pression (40) au dispositif de freinage respectif (26; 27; 28; 29).

3. Dispositif d'entraînement hydrostatique de déplacement selon la revendication 1 ou 2, **caractérisé en ce que** la pompe auxiliaire (11) est entraînée conjointement avec la pompe hydraulique (3).

4. Dispositif d'entraînement hydrostatique de déplacement selon l'une des revendications 1 à 3, **caractérisé en ce que** la canalisation de pression (40) est reliée à une canalisation de travail (4; 5), qui relie la pompe hydraulique (3) aux moteurs hydraulique (6-9).

5. Dispositif d'entraînement hydrostatique de déplacement selon l'une des revendications 1 à 4, **caractérisé en ce que** l'unité de commande (24) est reliée à un autre capteur (42) de la vitesse de rotation, qui détecte la vitesse de rotation ($n_p$) de la pompe hydraulique (3).

6. Dispositif d'entraînement hydrostatique de déplacement selon l'une des revendications 1 à 5, **caractérisé en ce que** l'unité de commande (24) est reliée à un capteur de vitesse (48), qui détecte la vitesse (v) d'un véhicule entraîné par le dispositif d'entraînement de déplacement (1).

7. Dispositif d'entraînement hydrostatique de déplacement selon l'une des revendications 1 à 6, **caractérisé en ce que** l'unité de commande (24) est reliée à un capteur (49) de l'angle de braquage, qui détecte l'angle de braquage ($\alpha$) d'un véhicule entraîné par le dispositif d'entraînement de déplacement (1).

8. Dispositif d'entraînement hydrostatique de déplacement selon l'une des revendications 1 à 7, **caractérisé en ce que** l'unité de commande (24) est une unité de commande électronique (24), notamment un microcontrôleur ou un microprocesseur.